# EUROPÄISCHE PATENTSCHRIFT

(11) **EP 0 736 289 B1**
(45) Veröffentlichungstag und Bekanntmachung des Hinweises auf die Patenterteilung: **08.10.2003**
(21) Anmeldenummer: 96103243.0
(22) Anmeldetag: 02.03.1996
(51) Int. Cl.: A61C 11/08

(54) **Auswechselbare Magnethalterung mit entsprechend ausgebildeter Montageplatte für alle gängigen Dentalartikulatoren**
Exchangeable magnetic holder having a correspondingly formed mounting plate for all common dental articulators
Support magnétique échangeable comportant une plaque de montage à forme correspondante pour tous les articulateurs dentaires usuels

(30) Priorität: 10.03.1995 DE 19508555
(43) Veröffentlichungstag der Anmeldung: 09.10.1996
(73) Patentinhaber: Mack, Florian A., 80637 München (DE)
(72) Erfinder: Mack, Florian A., 80637 München (DE)
(74) Vertreter: Steffens, Joachim, Dr.

(56) Entgegenhaltungen:
- DE-A- 3 918 495
- DE-A- 4 235 959
- DE-U- 8 806 485

## Beschreibung

Die vorliegende Erfindung betrifft eine auswechselbare Magnethalterung mit entsprechend ausgebildeter Montageplatte für alle gängigen Dental-Artikulatoren.

Derartige Dental-Artikulatoren, die beispielsweise in den deutschen Patentschriften DE-PS 25 11 388 und DE-PS 31 35 122 derselben Anmelderin beschrieben sind, bestehen im wesentlichen aus einem Rahmenunterteil mit der Halterungsvorrichtung für die Montageplatte für das Unterkiefermodell und einem Rahmenoberteil mit der Halterungsvorrichtung für die Montageplatte für das Oberkiefermodell.

Dental-Artikulatoren dienen zur Simulation der Bewegungen des Unterkiefers, wobei durch die individuellen Justiermöglichkeiten der Verlauf der Grenzlinien nachvollzogen werden kann. Voraussetzung dafür ist die koordinaten-richtige, d.h. schädelbezügliche, Einmontage der Kiefermodelle in den Artikulator.

Zu dieser Einmontage dienen zwei Montageplatten, von denen jeweils eine am Rahmenunterteil und am Rahmenoberteil des Artikulators befestigt werden. Die Befestigung der Montageplatten erfolgt dabei üblicherweise mittels Schrauben, wobei zwecks einer eindeutigen Positionierung beim wiederholten Aufsetzen der Montageplatten im Artikulator sowohl am Oberteil als auch am Unterteil des Artikulators je zwei Positionierbolzen angeordnet sind, die bei der Positionierung der Montageplatten in entsprechende Bohrungen in den Montageplatten hineinragen. Eine der beiden Bohrungen ist dabei als Langloch mit elastischen Wandungen ausgebildet.

Derartige Montageplatten sind beispielsweise in der eigenen deutschen Patentschrift DE-PS 25 51 189 beschrieben.

Es sind auch Befestigungen der Montageplatten am Rahmenoberteil beziehungsweise Rahmenunterteil eines Artikulators mittels Magneten bekannt. Beispielsweise ist in der eigenen DE-OS 42 35 959 eine Magnethalterung in Form einer runden Platte beschrieben. In dieser Platte ist ein Magnet fest eingelassen. Diese Magnethalteplatte mit dem eingelassenen Magnet wird an das Rahmenoberteil beziehungsweise Rahmenunterteil des Artikulators angeschraubt. Die Magnethalteplatte besitzt an ihrer im zusammengebauten Zustand zur Montageplatte weisenden Seite profilartige Vorsprünge, die zur Positionierung der an dieser Platte zu befestigenden Montageplatte dienen, indem die Montageplatte entsprechende profilartige Vertiefungen aufweist. In die Montageplatte wird eine Metallscheibe mit eingegipst und die Montageplatte haftet, wenn sie in der richtigen Position an die Magnethalteplatte angelegt wird mit dieser Metallscheibe am Magneten der Magnethalteplatte.

In der DE-OS 41 18 140 ist eine Magnethalterung beschrieben, bei der eine Magnetplatte herausnehmbar in einem in den Rahmen eingelassenen ferromagnetischen Topf angeordnet ist. Eine Montageplatte, die eine eingelassene Metallplatte besitzt, wird am Rahmen mit Hilfe von Positionierbolzen so angeordnet, daß eine wiederholbare Positionierung erfolgt und eine magnetische Befestigung zwischen der Metallplatte in der Montageplatte und dem im Rahmen befestigten Magneten erfolgt.

Nachteilig ist bei all diesen Magnethalterungen, daß spezielle neue Artikulatoren benötigt werden, die die entsprechenden Halterungen besitzen. Die bisher üblichen Artikulatoren mit einer herkömmlichen Schraubverbindung zwischen Montageplatte und Rahmenoberteil beziehungsweise Rahmenunterteil des Artikulators, die noch in großer Zahl verwendet werden, sind für diese Magnethalterungen nicht mehr verwendbar.

Aufgabe der vorliegenden Erfindung ist es daher, eine Magnethalterung mit entsprechend ausgebildeter Montageplatte zur Verfügung zu stellen, die ein Umrüsten der bisher üblichen Artikulatoren mit einer herkömmlichen Schraubverbindung zwischen Montageplatte und Rahmenoberteil beziehungsweise Rahmenunterteil auf eine magnetische Halterung ermöglicht.

Gelöst wird dies dadurch, daß eine Magnethalterung verwendet wird, die statt der herkömmlichen Befestigungsschraube bei den bisher üblichen Artikulatoren, in das Loch dieser Befestigungsschraube einschraubbar ist beziehungsweise einen Magneten zu verwenden, der direkt auf die herkömmliche Befestigungsschraube aufschraubbar ist. Es muß also kein neuer Artikulator angeschafft werden, sondern es ist ein einfaches Umrüsten des bisherigen Artikulators möglich, wobei nur eine neue Magnethalterung mit entsprechend angepaßter Montageplatte zur Anwendung kommt, die aus wenigen Einzelteilen besteht. Um das Umrüsten verschiedener bisher üblichen Artikulatoren zu ermöglichen, besitzt die bei der erfindungsgemäßen Magnethalterung verwendete Montageplatte mehrere Öffnungen für die bei verschiedenen Artikulatoren an unterschiedlichen Stellen vorhandenen Positionierbolzen.

Die erfindungsgemäße Magnethalterung und die entsprechend ausgebildete Montageplatte wird im folgenden anhand der Figuren 1 bis 4 näher beschrieben.
- Fig. 1: zeigt eine geschnittene Seitenansicht einer erfindungsgemäßen Magnethalterung mit entsprechend ausgebildeter Montageplatte im zusammengebauten Zustand;
- Fig. 2: zeigt die zum Rahmenoberteil beziehungsweise Rahmenunterteil des Artikulators gerichtete Seite der Montageplatte, die bei der erfindungsgemäßen Magnethalterung verwendet wird;
- Fig. 3: zeigt die zum Gipsmodell hin gerichtete Seite der in Figur 2 dargestellten Montageplatte mit den Vertiefungen zur Gipsretension;
- Fig. 4: zeigt die zum Rahmenoberteil beziehungsweise Rahmenunterteil des Artikulators gerichtete Seite einer abgewandelte Ausführungsform der Montageplatte.

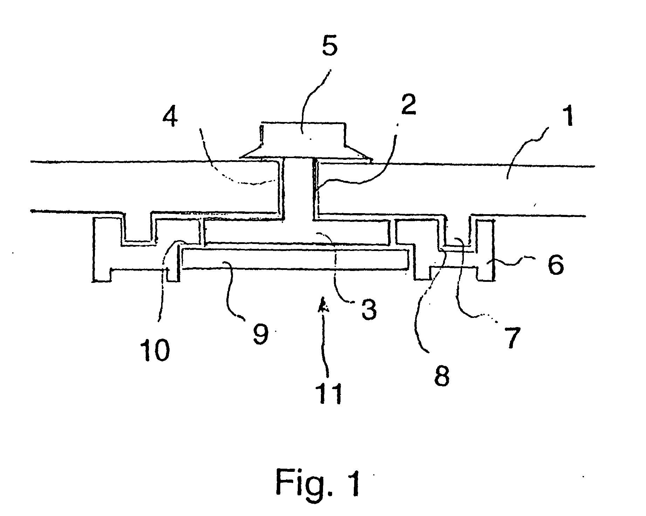

In Figur 1 ist die erfindungsgemäße Magnethalterung mit ihrer zugehörigen Montageplatte im in den Artikulator eingebauten Zustand zu s ehen. Die Magnethalterung wird in die schon vorhandene Öffnung 2 im Rahmen 1 eines bisher verwendeten Artikulators eingesetzt. Die Öffnung 2 diente bei den bisher verwendeten Artikulatoren zur Schraubbefestigung der Montageplatte am Rahmenoberteil beziehungsweise Rahmenunterteil des Artikulators. In diese Öffnung wird nunmehr die erfindungsgemäße Magnethalterung gesetzt. Sie besteht aus einem Magneten 3 in runder oder rechteckiger Plattenform. An diesem ist ein Gewindebolzen 4 fest angebracht. Der Magnet 3 wird mit seinem Gewindebolzen 4 durch die Öffnung 2 gesteckt und von oben her mit einer Mutter 5 an den Rahmen 1 des Artikulators geschraubt. Von unten wird nun die Montageplatte 6 so an die Magnethalterung herangeführt, daß die am Rahmen 1 des Artikulators üblicherweise vorhandenen Positionierbolzen 7 in die entsprechenden Vertiefungen 8 greifen. So ist eine gleichbleibende Positionierung der Montageplatte bezüglich des Rahmenoberteils beziehungsweise des Rahmenunterteils 1 des Artikulators bei wiederholtem Anbringen gewährleistet. Es ist auch möglich, den Magneten mit einem Gewindeloch zu versehen und ihn mit einer herkömmlichen Schraube, beispielsweise der schon von der Schraubverbindung her vorhandenen Schraube an das Rahmenoberteil beziehungsweise das Rahmenunterteil anzuschrauben. In die Montageplatte 6 wird beim Angipsen des Gipsmodells eine Metallplatte 9 mit eingegipst. Die Metallplatte 9 liegt dabei auf der vorspringenden Kante 10 einer Öffnung 11 der Montageplatte auf. Die Metallplatte 9 wird durch den Magneten 3 angezogen und hält so die Montageplatte 6 in einer sicheren aber lösbaren Verbindung am Rahmenoberteil beziehungsweise Rahmenunterteil 1 des Artikulators.

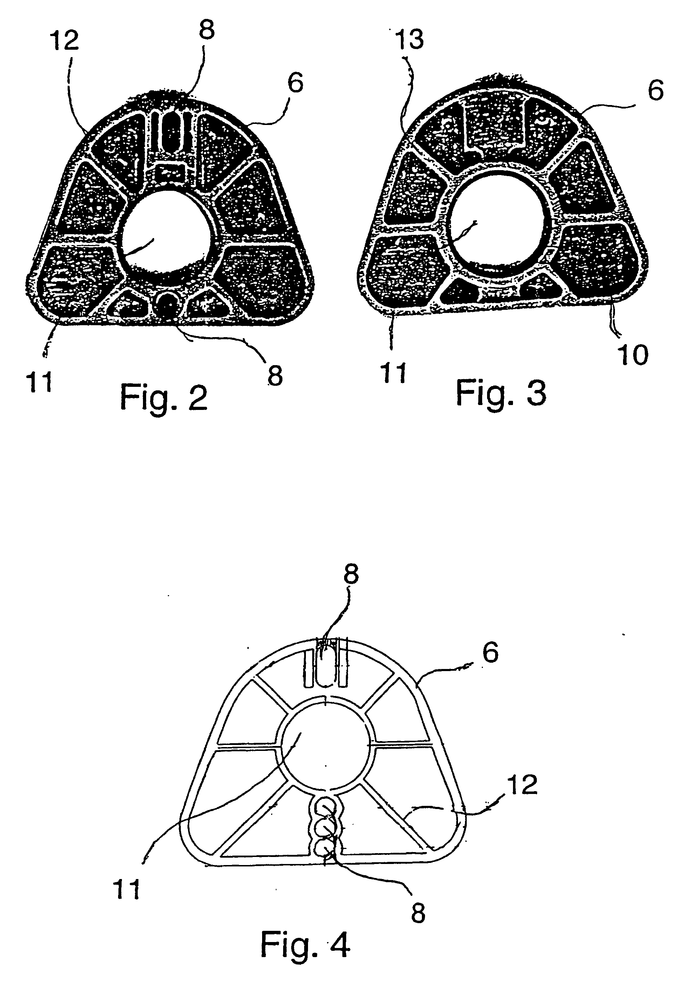

Die Figuren 2 bis 4 zeigen die Strukturen der Montageplatte 6.

In Figur 2 ist eine Draufsicht auf die zum Rahmenoberteil beziehungsweise Rahmenunterteil 1 des Artikulators gerichtete Seite der Montageplatte 6 gezeigt. Die Montageplatte besitzt eine Öffnung 11, in die der Magnet 3 eingreift. Es ist hier beispielshaft eine kreisrunde Form der Öffnung gezeigt, aber es sind prinzipiell beliebig geformte Öffnungen möglich, wobei jedoch die Form der Öffnung und die Form des Magneten übereinstimmen müssen. Die Montageplatte besitzt Vertiefungen 8, die zur Aufnahme der am Rahmenoberteil beziehungsweise Rahmenunterteil 1 des Artikulators angebrachten Positionierbolzen dienen. Einige der Vertiefungen können auch in Form eines elastischen Langloches ausgeführt sein, was einerseits das Einpassen erleichtert und andererseits dennoch eine sichere Positionierung gewährleistet. Die Montageplatte ist vorzugsweise in Form eines Kunststoffteiles hergestellt und besitzt daher zweckmäßigerweise Verstärkungsstege 12.

Figur 3 zeigt die Montageplatte 6 der Figur 2 von ihrer anderen Seite, nämlich der dem Gipsmodell zugewandten Seite. In der Öffnung 11 ist die umlaufende vorspringende Kante 10 zu sehen, gegen die sich die in die Öffnung 11 von dieser Seite her gelegte (hier nicht dargestellte) Metallplatte 9 stützt. Die Montageplatte 6 kann auf dieser Seite mit vorstehenden Strukturen 13 versehen sein, die ein Angipsen des Gipsmodells erleichtern.

Figur 4 zeigt eine abgewandelte Ausführungsform der Montageplatte. Sie ist hier dargestellt in Form einer Draufsicht auf die zum Rahmenoberteil beziehungsweise Rahmenunterteil des Artikulators gerichtete Seite. In Abwandlung der in Figur 2 dargestellten Ausführungsform besitzt die hier dargestellte Ausführungsform mehrere nebeneinanderliegende Vertiefungen 8 zur Aufnahme der Positionierbolzen, die am Rahmen des Artikulators befestigt sind. Die Vertiefungen können gegebenenfalls auch unterschiedliche Durchmesser aufweisen. Durch die Vielzahl der Vertiefungen 8 ist die Verwendung der gleichen Montageplatte bei Artikulatoren mit unterschiedlich plazierten Positionierbolzen möglich. Dies trägt zusätzlich zur leichteren Umrüstbarkeit schon bestehender Artikulatoren bei.

Insgesamt gibt damit die hier beschriebene Erfindung dem Benutzer eine Magnethalterung an die Hand, die er bei bisher üblichen Artikulatoren anstelle der herkömmlichen Schraubverbindung einsetzen kann. Dies ist eine sehr praktische und leicht durchführbare Lösung, da das Umrüsten in einfachster Weise durch Herausschrauben der bisherigen Schraubverbindung und durch Einfügen der Magnethalterung erfolgt. Sie ist auch kostengünstig, da die erfindungsgemäße Magnethalterung und die entsprechend ausgebildete Montageplatte nur aus wenigen Einzelteilen besteht.

## Patentansprüche

1. Auswechselbare Magnethalterung mit entsprechend ausgebildeter Montageplatte zur lösbaren Befestigung von Gipsmodellen am Rahmenunterteil und am Rahmenoberteil eines Dental-Artikulators, wobei die Gipsmodelle jeweils an einer Montageplatte angegipst sind, die eine Metallplatte (9) aufweist, mit der die Montageplatte an der Magnethalterung festgehalten wird, **dadurch gekennzeichnet, daß** die Magnethalterung aus einem Magneten (3) mit einem angeformten Gewindebolzen (4) besteht, der in die Öffnung (2) der Schraubverbindung zwischen dem Rahmenoberteil beziehungsweise Rahmenunterteil (1) des Artikulators und der Montageplatte (6) bei bisher üblichen Dental-Artikulatoren anstatt dieser Schraubverbindung eingefügt ist, wobei der Gewindebolzen (4) an seinem oberen Ende mittels einer Mutter (5) am Rahmenoberteil beziehungsweise Rahmenunterteil (1) befestigt ist und daß die Montageplatte (6) eine Öffnung aufweist, die den Magneten (3) aufnimmt, derart daß die in dieser Öffnung angeordnete Metallplatte (9) den Magneten (3) berührt.

2. Auswechselbare Magnethalterung mit entsprechend ausgebildeter Montageplatte zur lösbaren Befestigung von Gipsmodellen am Rahmenunterteil und am Rahmenoberteil eines Dental-Artikulators, wobei die Gipsmodelle jeweils an einer Montageplatte angegipst sind, die eine Metallplatte (9) aufweist, mit der die Montageplatte an der Magnethalterung festgehalten wird, **dadurch gekennzeichnet, daß** die Magnethalterung aus einem Magneten (3) besteht, der mit einem Gewindeloch an der Schraube der herkömmlichen Schraubverbindung befestigt ist und daß die Montageplatte (6) eine Öffnung aufweist, die den Magneten (3) aufnimmt, derart daß die in dieser Öffnung angeordnete Metallplatte (9) den Magneten (3) berührt.

3. Magnethalterung nach Anspruch 1 oder 2, **dadurch gekennzeichnet, daß** die Metallplatte (9) abgestützt ist auf einer Kante (10) innerhalb der Öffnung (11) der Montageplatte (6).

4. Magnethalterung nach einem der vorhergehenden Ansprüche, **dadurch gekennzeichnet, daß** die Metallplatte (9) bündig mit der dem Gipsmodell zugewandten Seite abschließt oder gegenüber dieser Seite sogar vertieft angeordnet ist.

5. Magnethalterung nach einem der vorhergehenden Ansprüche, **dadurch gekennzeichnet, daß** die Metallplatte (9) lösbar mit der Montageplatte (6) verbunden ist.

6. Magnethalterung nach einem der vorhergehenden Ansprüche, **dadurch gekennzeichnet, daß** die Montageplatte (6) eine Vielzahl von Vertiefungen (8) aufweist zur Aufnahme von am Rahmen (1) des Artikulators befindlichen Positionierbolzen (7).

7. Magnethalterung nach einem der vorhergehenden Ansprüche, **dadurch gekennzeichnet, daß** die Montageplatte (6) an der dem Gipsmodell zugewandten Seite vorstehende Strukturen (13) aufweist.

8. Magnethalterung nach einem der vorhergehenden Ansprüche, **dadurch gekennzeichnet, daß** der Magnet (3) kreisscheibenförmig ausgebildet ist.

## Claims

1. An exchangeable magnet fixture with correspondingly shaped mounting plate for releasably securing plaster models on the lower frame part and on the upper frame part of a dental articulator, the plaster models in each case being plaster-cast on a mounting plate which has a metal plate (9) with which the mounting plate is held securely on the magnet fixture, wherein the magnet fixture consists of a magnet (3) with an integrally formed threaded bolt (4) which is introduced into the opening (2) of the screw connection between the upper frame part or lower frame part (1) of the articulator and the mounting plate (6) in hitherto customary dental articulators, in place of said screw connection, the threaded bolt (4) being secured at its upper end by means of a nut (5) on the upper frame part or lower frame part (1), and wherein the mounting plate (6) has an opening which receives the magnet (3), so that the metal plate (9) arranged in this opening makes contact with the magnet (3).

2. An exchangeable magnet fixture with correspondingly shaped mounting plate for releasably securing plaster models on the lower frame part and upper frame part of a dental articulator, the plaster models in each case being plaster-cast on a mounting plate which has a metal plate (9) with which the mounting plate is held securely on the magnet fixture, wherein the magnet fixture consists of a magnet (3) which is secured via a threaded hole on the screw of the conventional screw connection, and wherein the mounting plate (6) has an opening which receives the magnet (3), so that the metal plate (9) arranged in this opening makes contact with the magnet (3).

3. The magnet fixture as claimed in claim 1 or 2, wherein the metal plate (9) is supported on an edge (10) inside the opening (11) of the mounting plate (6).

4. The magnet fixture as claimed in one of the preceding claims, wherein the metal plate (9) ends flush with the side facing the plaster model or is even arranged recessed in relation to this side.

5. The magnet fixture as claimed in one of the preceding claims, wherein the metal plate (9) is connected releasably to the mounting plate (6).

6. The magnet fixture as claimed in one of the preceding claims, wherein the mounting plate (6) has a large number of depressions (8) for receiving positioning bolts (7) located on the frame (1 ) of the articulator.

7. The magnet fixture as claimed in one of the preceding claims, wherein the mounting plate (6) has protruding structures (13) on the side facing the plaster model.

8. The magnet fixture as claimed in one of the preceding claims, wherein the magnet (3) is designed in the shape of a circular disk.

## Revendications

1. Support magnétique échangeable comportant une plaque de montage à forme correspondante pour fixation amovible de modèles en plâtre sur la partie inférieure et la partie supérieure du cadre d'un articulateur dentaire, les modèles en plâtre étant respectivement plâtrés sur une plaque de montage, qui présente une plaque métallique (9) avec laquelle la plaque de montage est maintenue sur le support magnétique,
**caractérisé en ce que**
le support magnétique comprend un aimant (3) avec un goujon fileté (4) façonné, lequel est emboîté dans l'ouverture (2) du raccord vissé entre la partie supérieure du cadre, respectivement la partie inférieure du cadre (1) de l'articulateur et la plaque de montage (6), jusqu'aux autres articulateurs dentaires au lieu de ce raccord vissé, le goujon fileté (4) étant fixé par son extrémité supérieure au moyen d'un écrou (5) sur la partie supérieure du cadre, respectivement sur la partie inférieure du cadre (1), et la plaque de montage (6) présente une ouverture qui reçoit l'aimant (3) de telle sorte que la plaque métallique (9) disposée dans cette ouverture touche l'aimant (3).

2. Support magnétique échangeable comportant une plaque de montage à forme correspondante pour fixation amovible de modèles en plâtre sur la partie inférieure et la partie supérieure du cadre d'un articulateur dentaire, les modèles en plâtre étant respectivement plâtrés sur une plaque de montage, qui présente une plaque métallique (9) avec laquelle la plaque de montage est maintenue sur le support magnétique,
**caractérisé en ce que**
le support magnétique comprend un aimant (3) qui est fixé avec un trou fileté à la vis d'un raccord vissé classique, et la plaque de montage (6) présente une ouverture qui reçoit l'aimant (3) de telle sorte que la plaque métallique (9) disposée dans cette ouverture touche l'aimant (3).

3. Support magnétique selon la revendication 1 ou 2,
**caractérisé en ce que**
la plaque métallique (9) s'appuie contre un rebord (10) à l'intérieur de l'ouverture (11) de la plaque de montage (6).

4. Support magnétique selon l'une des revendications précédentes,
**caractérisé en ce que**
la plaque métallique (9) se termine obligatoirement avec la face tournée vers le modèle en plâtre ou est disposée contre cette face même creusée.

5. Support magnétique selon l'une des revendications précédentes,
**caractérisé en ce que**
la plaque métallique (9) est reliée de manière amovible avec la plaque de montage (6).

6. Support magnétique selon l'une des revendications précédentes,
**caractérisé en ce que**
la plaque de montage (6) présente une quantité de trous (8) destinés à recevoir des goupilles de positionnement (7) se trouvant sur le cadre (1) de l'articulateur.

7. Support magnétique selon l'une des revendications précédentes,
**caractérisé en ce que**
la plaque de montage (6) présente des structures en saillie (13) sur la face tournée vers le modèle en plâtre.

8. Support magnétique selon l'une des revendications précédentes,
**caractérisé en ce que**
l'aimant (3) à une forme circulaire.
